Europäisches Patentamt

European Patent Office

Office européen des brevets

(19)

(11) **EP 1 431 747 A2**

(12) **DEMANDE DE BREVET EUROPEEN**

(43) Date de publication:
**23.06.2004 Bulletin 2004/26**

(51) Int Cl.7: **G01N 21/17**, C12Q 1/68,
B01L 9/00

(21) Numéro de dépôt: **03104760.8**

(22) Date de dépôt: **17.12.2003**

(84) Etats contractants désignés:
**AT BE BG CH CY CZ DE DK EE ES FI FR GB GR
HU IE IT LI LU MC NL PT RO SE SI SK TR**
Etats d'extension désignés:
**AL LT LV MK**

(30) Priorité: **20.12.2002 FR 0216325**

(71) Demandeur: **COMMISSARIAT A L'ENERGIE
ATOMIQUE
75752 Paris Cédex 15 (FR)**

(72) Inventeurs:
• **GETIN, Stéphane
  38100, GRENOBLE (FR)**
• **GAUGIRAN, Stéphanie
  38000, GRENOBLE (FR)**

(74) Mandataire: **Poulin, Gérard et al
Brevatome
3, rue du Docteur Lancereaux
75008 Paris (FR)**

(54) **Biocapteur à substrat quelconque pouvant être caracterisé en deflexion photothermique**

(57) L'invention concerne un support d'échantillon destiné à supporter un échantillon devant subir une détection et/ou une analyse par une méthode de détection photothermique mettant en oeuvre un faisceau pompe d'irradiation de l'échantillon et un faisceau sonde de détection et/ou d'analyse. Il comprend un substrat supportant un empilement de couches minces diélectriques formant un miroir de Bragg qui est destiné à supporter l'échantillon, l'empilement de couches minces diélectriques permettant de réfléchir le faisceau pompe qui lui parvient.

L'invention concerne également un dispositif de détection et/ou d'analyse d'un échantillon par une méthode photothermique, ledit dispositif comprenant un support d'échantillon selon l'invention, un moyen d'éclairage de l'échantillon supporté par ledit support et fournissant un faisceau pompe, un moyen de détection et/ou de mesure de l'absorption ou de la réflexion du faisceau pompe par l'échantillon lorsqu'il est éclairé par ledit moyen d'éclairage.

Enfin, l'invention concerne une utilisation particulière dudit dispositif.

FIG. 1

EP 1 431 747 A2

**Description**

## DOMAINE TECHNIQUE

La présente invention concerne un support d'échantillon utilisable dans un procédé de détection surfacique de composants absorbants placés sur ledit support d'échantillon à l'aide de méthodes de déflexion photothermique. L'invention a trait également à un dispositif de détection photothermique utilisant le support d'échantillon selon l'invention.

Cette invention peut s'appliquer à l'analyse de surface telle que la cartographie d'absorption ou l'imagerie de paramètre thermique, ainsi qu'au domaine général de la détection et de l'analyse d'une reconnaissance moléculaire entre une première et une deuxième molécule, par exemple en biologie moléculaire. La reconnaissance moléculaire peut être définie comme une interaction spécifique entre deux molécules plus ou moins complexes, conduisant à une liaison des deux molécules suffisamment stable pour que les molécules puissent être détectées liées. Il peut s'agir par exemple d'une hybridation d'acides nucléiques (ADN et/ou ARN), d'une réaction de reconnaissance de type antigène/anticorps, d'une interaction de type protéine/protéine, d'une interaction de type enzyme/substrat, etc...

Le dispositif selon l'invention trouvera notamment une application dans la détection d'hybridation d'oligonucléotides sur support solide, en milieu aqueux ou à l'air, par exemple dans le cadre d'un criblage (« screening » en anglais) ou d'une détection d'hybridation sur une biopuce.

## ETAT DE LA TECHNIQUE ANTERIEURE

Il existe plusieurs méthodes de détection de substances absorbantes sur une surface. On s'intéressera plus particulièrement aux méthodes de détection photothermique dont une présentation complète peut être trouvée dans l'ouvrage de Bialkowski **[1]**, dont la référence est indiquée à la fin de cette description.

Parmi les méthodes de détection photothermique se trouve la méthode de déflexion photothermique.

Soit une couche de substance absorbante (appelée échantillon) à étudier déposée sur un substrat. Lorsque cet échantillon est irradié par un faisceau lumineux, dit faisceau « pompe », il absorbe une partie de l'énergie lumineuse incidente du faisceau (le reste de cette énergie lumineuse peut être rayonné ou donner naissance à de la fluorescence ou à une réaction chimique par exemple). Cette absorption va provoquer un échauffement de l'échantillon, qui, par conduction thermique, va chauffer le substrat et le superstrat attenants. L'élévation de température due à l'absorption est en général inhomogène et donne donc lieu à un gradient d'indice du milieu analysé et des milieux adjacents, la densité des milieux étant rendue inhomogène par l'élévation de température. En faisant passer un faisceau de lumière, dit faisceau « sonde », dans la zone où l'échantillon a été irradié, on va observer une déviation dudit faisceau due à la différence de gradients d'indice. En mesurant cette déviation, on va pouvoir quantifier le gradient en question, et en déduire ainsi la température et l'absorption de l'échantillon.

L'avantage de la méthode photothermique est qu'elle n'est sensible qu'à l'absorption de la couche de substance et non à sa diffusion.

De plus, cette technique est beaucoup plus sensible que la méthode de spectrophotométrie. En effet, on peut obtenir une détection des pertes par absorption avec une précision de l'ordre du ppm, où le terme "pertes" désigne le rapport entre la puissance absorbée par l'échantillon et la puissance lumineuse incidente reçue.

Cette méthode photothermique est très utilisée dans le domaine de la détection en biologie. Elle peut en effet être utilisée pour détecter de manière directe l'hybridation de l'ADN qui présente une forte absorption dans l'ultraviolet (voir le document **[2]**) ou bien pour qualifier les étapes technologiques menant au dépôt d'oligonucléotides sur des biopuces à ADN dans le cadre de la technique de dépôt par synthèse in situ (voir le document **[3]** référencé à la fin de la description).

Néanmoins, pour que cette méthode soit utilisable, il faut limiter le bruit de fond causé par l'absorption du substrat. En effet, l'absorption de la lumière par le substrat doit être très faible afin de ne pas « noyer » le signal des substances à analyser dans le bruit de fond induit par le substrat (voir le document **[4]** référencé à la fin de la description).

Or il s'avère que les substrats couramment employés dans le domaine des biocapteurs (lames de microscope réalisées en verre floté ou encore en silicium) sont trop absorbants et satisfont très difficilement aux conditions précitées.

Il est donc bien souvent nécessaire d'utiliser des substrats en silice fondue présentant une très faible absorption mais dont le coût, en fonction de la pureté du matériau, peut être important.

Pour des raisons de format, ces substrats sont par ailleurs mal adaptés aux dispositifs de réalisation (par exemple, les synthétiseurs commerciaux) et de caractérisation (scanners confocaux) employés par les biologistes.

De surcroît, les dispositifs actuels présentent l'inconvénient de devoir utiliser des sources lasers puissantes et bien souvent coûteuses afin d'assurer une détection correcte des substances.

## EXPOSÉ DE L'INVENTION

Le dispositif selon l'invention vise à résoudre les inconvénients rencontrés dans l'art antérieur.

Ce but est atteint avec un support d'échantillon destiné à supporter un échantillon devant subir une détection et/ou une analyse par une méthode de détection photothermique mettant en oeuvre un faisceau pompe d'irradiation de l'échantillon et un faisceau sonde de détection et/ou d'analyse, caractérisé en ce qu'il comprend un substrat supportant un empilement de couches minces diélectriques formant un miroir de Bragg qui est destiné à supporter l'échantillon, l'empilement de couches minces diélectriques permettant de réfléchir le faisceau pompe qui lui parvient.

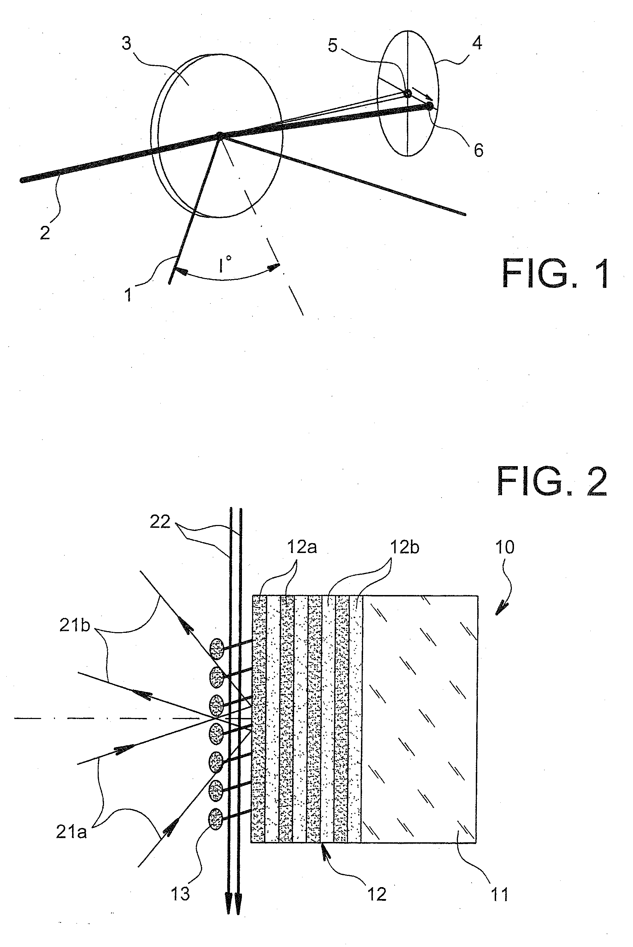

Grâce au support d'échantillon selon l'invention, l'empilement de couches minces optiques ou miroir de « Bragg » réfléchit le signal du faisceau pompe de sorte que le signal n'atteint pas le substrat absorbant. Ainsi, on n'a plus à s'inquiéter de l'absorption du substrat et on peut utiliser n'importe quel substrat comme support d'échantillon. On peut noter que les éléments à analyser seront placés en surface de l'ensemble substrat-multicouche, comme le montre la figure 2.

Le dépôt de la multicouche ou miroir de Bragg est caractérisé par l'alternance de films minces diélectriques qui n'absorbent pas la lumière à la longueur d'onde du faisceau pompe. Ces films présentent successivement des indices de réfraction élevé et bas.

Avantageusement, le miroir de Bragg comportera des couches minces diélectriques d'indice de réfraction élevé formées d'un matériau choisi parmi le groupe constitué de $TiO_2$, $HfO_2$, $SiO_3N_4$, $Ta_2O_5$, $Al_2O_3$ et $In_2O_3$.

Avantageusement, le miroir de Bragg comportera des couches minces diélectriques d'indice de réfraction bas formées d'un matériau choisi parmi le groupe constitué de $SiO_2$, $MgF_2$ et LiF.

Les couches minces diélectriques que l'on dépose sur le substrat doivent également avoir une épaisseur précise pour former un miroir de Bragg. L'épaisseur est calculée selon la formule suivante :

$$e = \frac{\lambda'}{4n / \cos(\theta)}$$

où n est l'indice du matériau considéré, λ' la longueur d'onde fictive du faisceau pompe, θ l'angle que fait le faisceau dans la couche considérée par rapport à la normale à l'empilement. Et

$$\lambda' = \lambda \times \frac{\cos\theta_H + \cos\theta_B}{2}$$

avec λ la longueur d'onde du faisceau pompe, $\theta_H$ l'angle que fait le faisceau pompe avec la normale dans la couche haut indice et $\theta_B$ l'angle que fait le faisceau pompe avec la normale dans la couche bas indice.

L'angle θ se calcule par les lois de Descartes en utilisant la formule :

$$\theta = a\sin\left(\frac{n_{sup} \times \sin(\theta_{ref})}{N}\right)$$

où $\theta_{ref}$ est l'angle d'incidence du faisceau pompe dans le milieu où se trouve l'échantillon à analyser et $n_{sup}$ l'indice de réfraction de ce milieu. N sera, selon le cas, l'indice de réfraction de la couche haut indice si l'on calcule l'angle que fait le faisceau pompe avec la normale dans la couche haut indice, et sera l'indice de réfraction de la couche bas indice si l'on calcule l'angle que fait le faisceau pompe avec la normale dans la couche bas indice.

Le dépôt des couches minces diélectriques peut être réalisé par dépôt physique en phase vapeur ou dépôt PVD (« Physical Vapor Deposition »), par dépôt chimique en phase vapeur ou CVD (« Chemical Vapor Deposition) ou par voie sol gel.

Avantageusement, la couche supérieure formant le miroir de Bragg est biocompatible avec l'échantillon que l'on veut fixer sur le support d'échantillon.

Le support d'échantillon ainsi réalisé présente la propriété de réduire ou d'annuler la propagation du faisceau pompe vers le substrat, et ainsi le bruit de fond introduit par l'absorption du substrat dans les supports de l'art antérieur est limité ou supprimé.

Selon un mode particulier de l'invention, la couche supérieure formant le miroir de Bragg est une couche ayant un indice de réfraction bas.
Ainsi réalisé, le dispositif renforce l'intensité lumineuse au voisinage des substances à détecter en surface par rapport au substrat nu. Ceci présente deux avantages :

- on augmente la sensibilité de détection du support d'échantillon selon l'invention par rapport à un substrat seul,
- on peut diminuer l'intensité requise pour le laser pompe.

L'invention concerne également un dispositif de détection et/ou d'analyse d'un échantillon par une méthode photothermique, ledit dispositif comprenant un support d'échantillon selon l'invention, un moyen d'éclairage de l'échantillon supporté par ledit support et fournissant un faisceau pompe, un moyen de détection et/ou de mesure de l'absorption ou de la réflexion du faisceau pompe par l'échantillon lorsqu'il est éclairé par ledit moyen d'éclairage.

Selon un mode particulier de l'invention, le dispositif comprendra en outre un moyen de positionnement dudit moyen de détection et/ou de mesure. En effet, l'information obtenue par ce dispositif étant locale, le moyen de détection et/ou de mesure de l'absorption ou de la réflexion du faisceau pompe peut être couplé à un système de déplacement du support d'échantillon relativement au faisceau pompe. L'ensemble permet alors de comparer les valeurs de déviation du faisceau sonde d'un point à l'autre du support d'échantillon, en particulier le signal peut être représenté sous forme de cartographie. Selon l'invention, le moyen de positionnement du support peut être tout moyen connu de déplacement précis dudit support d'échantillon par exemple des platines de translation et de rotation micrométrique.

Avantageusement, le moyen d'éclairage de l'échantillon fournissant le faisceau pompe sera une source laser.

Avantageusement, le moyen de détection et/ ou de mesure de l'absorption ou de la réflexion par l'échantillon comprendra une source de lumière procurant un faisceau sonde et des moyens de détection ou de mesure de la déviation du faisceau sonde.

Avantageusement, le faisceau sonde aura une longueur d'onde qui n'est pas absorbée par l'échantillon. De même, la source de lumière sera avantageusement une source laser.

Selon un mode particulier de l'invention, les moyens de détection de la déviation du faisceau sonde comportent une photodiode multi-élément ou une photodiode simple. La photodiode multi-élément pourra être choisie parmi le groupe constitué d'un détecteur à deux ou quatre quadrants, d'un détecteur barrette, d'un détecteur matriciel, tandis que la photodiode simple sera soit partiellement recouverte par un cache ou couteau, soit ne recevra qu'une partie du faisceau sonde.

Le mode de détection des composants absorbants pourra être direct : la substance à détecter absorbe la lumière envoyée sur l'échantillon si la longueur d'onde de fonctionnement du dispositif correspond à la longueur d'onde d'absorption de la substance. En d'autres termes, il y aura absorption si la longueur d'onde du faisceau pompe est choisie de manière à ce que l'échantillon soit absorbant à cette longueur d'onde.

Le mode de détection peut également être indirect. Dans ce cas, les substances à détecter sont équipées de marqueurs qui absorbent la lumière envoyée sur l'échantillon à la longueur d'onde du faisceau pompe. En d'autres termes, la longueur d'onde du faisceau pompe est choisie de manière à ce que des marqueurs équipant l'échantillon soient absorbants à cette longueur d'onde. Les marqueurs absorbants pourront être, par exemple, un colorant, des particules métalliques ou des boîtes quantiques (« quantum-dots » en anglais).

Enfin, l'invention concerne l'utilisation de ce dispositif pour un test, un diagnostic ou une détection d'hybridation d'oligonucléotides, en milieu liquide ou dans l'air, sur support solide dans le cadre du « screening » ou de la détection d'hybridation sur des biopuces.

## BRÈVE DESCRIPTION DES DESSINS

L'invention sera mieux comprise et d'autres avantages et particularités apparaîtront à la lecture de la description qui va suivre, donnée à titre d'exemple non limitatif, accompagnée des dessins annexés parmi lesquels :

- la figure 1 est un schéma illustrant une configuration possible pour un dispositif de mesure d'absorption par déflexion photothermique,
- la figure 2 est un schéma illustrant le dispositif de déflexion photothermique avec un substrat comportant une multicouche selon l'invention.

## DESCRIPTION DÉTAILLÉE DE MODES DE RÉALISATION DE L'INVENTION

L'orientation du faisceau pompe par rapport au faisceau sonde peut être choisie à loisir, par exemple en fonction de l'encombrement mécanique et/ou pour optimiser la sensibilité en cherchant le maximum d'absorption en fonction de l'angle d'incidence. Mais concernant le faisceau sonde, il faut qu'il soit placé de manière à ce qu'il traverse la zone dans laquelle l'échantillon à analyser a été irradié par le faisceau pompe. En effet, c'est cette traversée du faisceau sonde par des gradients d'indices différents qui va provoquer la déviation dudit faisceau sonde et ainsi permettre de mesurer l'absorption de l'échantillon. Dans la figure 2, on a placé le faisceau sonde 22 de manière à ce qu'il rase la surface du support d'échantillon 10.

Sur la figure 1, les faisceaux sonde et pompe se croisent en formant un angle choisi. La référence 1 indique le faisceau pompe, la référence 2 le faisceau sonde, la référence 3 le support d'échantillon, sur lequel on a positionné l'échantillon de mesure, la référence 4 représente un détecteur ; la référence 5 est une tache lumineuse formée par le faisceau sonde sur le détecteur 4 lorsqu'on utilise un échantillon de référence non absorbant, et la référence 6 est une tache lumineuse formée par le faisceau sonde sur le détecteur 4 lorsqu'on utilise l'échantillon à analyser. On voit bien qu'entre les deux taches 5 et 6, il y a eu une déviation du faisceau sonde, ce qui indique qu'il y a eu absorption d'une certaine quantité du faisceau pompe par l'échantillon à analyser.

Sur la figure 2, on a une représentation détaillée du dispositif de déflexion photothermique utilisant le support d'échantillon selon l'invention. Le support d'échantillon 10 est composé d'un substrat 11 sur lequel on a déposé une multicouche 12 ; l'échantillon 13 à analyser est placé sur la multicouche 12. On envoie un faisceau pompe incident 21a sur l'échantillon 13 (une partie du faisceau pompe est réfléchi, voir la référence 21b) et on mesure l'absorption de l'échantillon en mesurant la déviation d'un faisceau sonde 22.

Le substrat utilisé selon l'invention pourra être quelconque dans la mesure où il sera apte à recevoir des dépôts de couches minces désirées. Le substrat pourra être par exemple du silicium ou du verre.

Par exemple, pour un faisceau pompe de longueur d'onde $\lambda = 514$ nm, le support d'échantillon comportera un substrat de verre et une multicouche constituée de l'alternance de couches minces diélectriques 12a en silice et d'épaisseur 100 nm, et de couches minces diélectriques 12b en dioxyde d'hafnium et d'épaisseur 75 nm. Cette multicouche sera composée de 20 couches minces.

**BIBLIOGRAPHIE**

[1] S.E. BIALKOWSKI, *Photothermal Spectroscopy Methods for Chemical Analysis,* Wiley-Interscience Publication 1996, ISBN 0-471-57467-8.

[2] P. CHATON, L. POUPINET, F. GINOT, A. NOVELLI ROUSSEAU, *Procédé et dispositif de détection d'une réaction de reconnaissance moléculaire,* demande de brevet FR-A-2 799 281.

[3] P. CHATON, F. VINET, *Procédé et dispositif d'analyse d'acides nucléiques fixés sur un support,* demande de brevet FR-A-2 799 282.

[4] ADELHELM et al, *Development of a sensitive detection system based on the photothermal effect for biomolecular interaction studies,* SPIE proceedings, vol. 2629, pages 325-333.

**Revendications**

1. Support d'échantillon (3, 10) destiné à supporter un échantillon (13) devant subir une détection et/ou une analyse par une méthode de détection photothermique mettant en oeuvre un faisceau pompe (21a) d'irradiation de l'échantillon (13) et un faisceau sonde (22) de détection et/ou d'analyse, **caractérisé en ce qu'**il comprend un substrat (11) supportant un empilement de couches minces diélectriques formant un miroir de Bragg (12) qui est destiné à supporter l'échantillon (13), l'empilement de couches minces diélectriques permettant de réfléchir le faisceau pompe (21a) qui lui parvient.

2. Support d'échantillon (3, 10) selon la revendication 1, **caractérisé en ce que** le miroir de Bragg (12) comporte des couches minces diélectriques d'indice de réfraction élevé formées d'un matériau choisi parmi le groupe constitué de $TiO_2$, $HfO_2$, $SiO_3N_4$, $Ta_2O_5$, $Al_2O_3$ et $In_2O_3$.

3. Support d'échantillon (3, 10) selon la revendication 1, **caractérisé en ce que** le miroir de Bragg (12) comporte des couches minces diélectriques d'indice de réfraction bas formées d'un matériau choisi parmi le groupe constitué de $SiO_2$, $MgF_2$ et LiF.

4. Support d'échantillon (3, 10) selon la revendication 1, **caractérisé en ce que** la couche supérieure formant le miroir de Bragg (12) est biocompatible avec l'échantillon (13).

5. Support d'échantillon (3, 10) selon la revendication 1, **caractérisé en ce que** la couche supérieure formant le miroir de Bragg (12) est une couche ayant un indice de réfraction bas.

6. Dispositif de détection et/ou d'analyse d'un échantillon (13) par une méthode photothermique, ledit dispositif comprenant un support d'échantillon (3, 10) selon l'une quelconque des revendications 1 à 5, un moyen d'éclairage de l'échantillon supporté par ledit support et fournissant un faisceau pompe (1, 21a), un moyen de détection et/ou de mesure de l'absorption ou de la réflexion du faisceau pompe par l'échantillon lorsqu'il est éclairé par ledit moyen d'éclairage.

7. Dispositif selon la revendication précédente, **caractérisé en ce qu'**il comprend en outre un moyen de positionnement dudit moyen de détection et/ou de mesure.

8. Dispositif selon la revendication 6, **caractérisé en ce que** le moyen d'éclairage de l'échantillon fournissant le faisceau pompe (1, 21a) est une source laser.

9. Dispositif selon la revendication 6, **caractérisé en ce que** le moyen de détection et/ou de mesure de l'absorption ou de la réflexion du faisceau pompe par l'échantillon comprend une source de lumière procurant un faisceau sonde (2, 22) et des moyens de détection de la déviation de ce faisceau sonde.

10. Dispositif selon la revendication précédente, **caractérisé en ce que** les moyens de détection de la déviation du faisceau sonde (2, 22) comportent une photodiode multi-élément ou une photodiode simple.

11. Dispositif selon l'une quelconque des revendications 6 à 10, **caractérisé en ce que** la longueur d'onde du faisceau pompe (1, 21a) est choisie pour que l'échantillon (13) soit absorbant à cette longueur d'onde.

12. Dispositif selon l'une quelconque des revendications 6 à 10, **caractérisé en ce que** la longueur d'onde du faisceau pompe (1, 21a) est choisie pour que des marqueurs équipant l'échantillon (13) soient absorbant à cette longueur d'onde.

13. Utilisation du dispositif selon l'une quelconque des revendications 6 à 12 pour un test, un diagnostic ou une détection d'hybridation d'oligonucléotides, en milieu liquide ou dans l'air, sur support solide dans le cadre du « screening » ou de la détection d'hybridation sur des biopuces.

FIG. 1

FIG. 2